# EUROPEAN PATENT APPLICATION

(11) **EP 2 876 712 A1**
(43) Date of publication of application: **27.05.2015**
(21) Application number: 13005483.6
(22) Date of filing: 22.11.2013
(51) Int. Cl.: H01M 4/86, H01M 8/02, H01M 8/18, H01M 4/90, H01M 4/92, H01M 8/24

(54) **Oxygen-vanadium redox flow battery with vanadium electrolyte having carbon particles dispersed therein**

(71) Applicant: DWI an der RWTH Aachen e.V., 52056 Aachen (DE)
(72) Inventor: Wessling, Matthias, 52074 Aachen (DE); Gendel, Youri, 52134 Herzogenrath (DE); David, Oana, 52064 Aachen (DE)
(74) Representative: Müller-Boré & Partner Patentanwälte PartG mbB

(57) **Abstract**

The present invention relates to an oxygen-vanadium redox flow battery with vanadium electrolyte having carbon particles dispersed therein.

## Description

The present invention relates to an oxygen-vanadium redox flow battery with vanadium electrolyte having carbon particles dispersed therein.

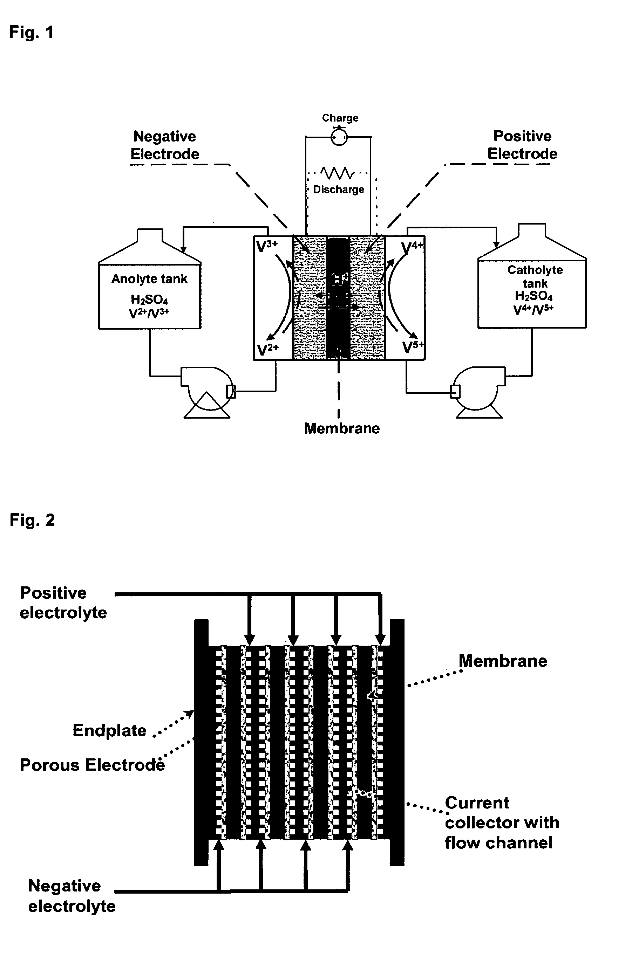

Redox Flow Batteries (RFB) are electrochemical reactors applied for the conversion and storage of electrical energy and are a promising route for the storage of renewable energy. Many types of RFB are known today while most studies are focused on all vanadium redox flow battery (VRFB) developed by Maria Skyllas-Kazacos (cf. Journal of the Electrochemical Society, 1986 133(5) 1057-1058). Figure 1 shows the principal structure of the all vanadium redox flow battery (abbreviated: aV-RFB).

Negative and positive electrolytes of fully charged VRFB are comprised of vanadium (II) and vanadium(V) ions, respectively, at a concentration of 0.5-2.5 M. High concentrations of sulphuric acid (2-5M) or mixtures of sulphuric and hydrochloric acids in both electrolyte solutions are applied to minimize precipitation of vanadium species and to achieve high energy density of aV-RFB. Carbon based electrodes with high surface area (carbon felt, cloth or paper) are applied as anode and cathode materials. Equations 1 and 2 represent stoichiometric reactions that occur in aV-RFB during charge and discharge. Proton or anion conductive membranes are used to separate two half cells of the aV-RFB and to maintain a flow of protons or sulphate ions between them.

### Charge ↔ Discharge

Positive half cell:

   VO²⁺ + H₂O ↔ VO₂⁺ + 2H⁺ + e⁻ (1)
Negative half cell:

   4V³⁺ + 4e⁻ ↔ 4V²⁺ (2)

Usually redox flow batteries comprise stacks of individual cells shown in Figure 1.

Oxygen-vanadium redox flow batteries (OV-RFB) have become the next generation of VRFB (cf. Menictas and Skyllas-Kazacos, Journal of Applied Electrochemistry, 2011 41 1223-1232). The negative half cell of the OV-RFB is the same as in all vanadium RFB, but the positive electrolyte solution is replaced by an oxygen containing gas stream. Air is preferably used. This approach is advantageous because energy density of OV-RFB is larger than of the aV-RFB. Equation 3 describes charge-discharge reactions that occur in the oxygen half cell of OV-RFB.

### Charge ↔ Discharge

Positive half cell: 2H₂O ↔ 4H⁺ + O₂ + 4e⁻ (3)

Oxygen reduction and evolution catalysts are required for the successful operation of OV-RFB. Carbon based electrodes cannot be applied in the oxygen half cell, since they are subjected to corrosion within an oxygen evolution reaction. For this reason, a first version of OV-RFB was investigated in discharge mode only with carbon made electrodes while the negative electrolyte was produced in an external electrolysis cell (cf. Menictas and Skyllas-Kazacos, Journal of Applied Electrochemistry, 2011 41 1223-1232). The next step in the development of OV-RFB was an introduction of porous titanium anode coated with bifunctional oxygen catalysts (Pt_{70%}/Ir_{30%}) (cf. Hosseiny et al., Electrochemistry Communications, 2011, 13, 751-754) and development of the unitized air-vanadium redox flow battery (uAV-RFB) (cf. S.S. Hosseiny, 2011. PhD-Thesis. University of Twente. DOI 10.3990/1.9789036532259) in which both charge and discharge operations could be performed using the same membrane-electrode assembly.

While many types of bifunctional oxygen catalysts are known today (cf. Jorissen, Journal of Power Sources, 2006, 155, 23-32), the most common catalysts for acidic environment comprise a mixture of Pt and Ir (oxide) for oxygen evolution and oxygen reductions, respectively. Such catalysts exist as layers on top of titanium surface. A commonly used composition of Pt/Ir catalyst is 70% Pt and 30% Ir (w/w). It was also shown that introduction of a third metallic component such as vanadium into Pt/Ir alloy significantly improves the performance of platinum group bifunctional oxygen catalysts (WO 2012/015296 A1).

Currently a planar cell geometry of electrochemical reactors as shown in Figure 2 prevails in Redox Flow Batteries as well as for other systems applied for Electrical Energy Conversion and Storage (EECS). However, tubular geometries are also emerging as disclosed in WO 2012/015296 A1 and WO 2009/010051 A2.

Such geometries are considered for better utilization of electrode and membrane materials. Similarly to the conventional, planar Membrane Electrode Assembly (MEA), a tubular MEA comprises three layers: positive and negative electrodes and an ion conductive membrane between them. A tubular design can have several important advantages: increased power densities (due to high surface area), lower manufacturing costs, lower parasitic power losses and others. The research aimed in the development of tubular electrochemical EECS systems is very intensive. Advantages of tubular shape geometry are realized in solid oxide fuel cells (SOFC) where tubular geometry is common and current research of SOFC is focused on micro-tubular cells (diameters < 2 mm). High efficiency of tubular MEA was proved for H₂-O₂ and methanol Proton Exchange Membrane Fuel Cells (PEMFC); microbial fuel cell, acid lead battery, direct carbon fuel cell and cable type lithium ion batteries.

A tubular Redox Flow Battery requires porous tubular titanium support electrodes, which is unknown today. One way to produce porous metallic or ceramic tubes is the wet spinning of a particles-loaded polymer solution followed by a thermal treatment (Buysse et al., Journal of Membrane Science, 2011 372(1-2) 239-248; Luiten-Olieman et al., Journal of Membrane Science, 2011 370(1-2) 124-130). However, production of porous titanium tubes *via* this technique is challenging. Due to high reactivity of Ti, sintering of bare titanium powder is carried out under inert argon atmosphere. In case of wet spinning followed by thermal treatment the procedure has the drawback that under inert atmosphere the polymer cannot be completely burnt out and will persist inside the tube during the sintering and might react with titanium and prevent particle bounding. Moreover, similar to other metal powders, titanium particles are enveloped with an oxide film that might prevent the sintering of Ti powders. Another obstacle is the formation of carbon layer on top of Ti within the thermal decomposition of the polymer. This layer should be removed prior to the application of catalysts onto the surface of Ti.

The object underlying the present invention is to provide novel Redox Flow Batteries (RFB) aimed at conversion and storage of electrical energy. The Redox Flow Batteries should show a good balance in energy storage and power generation, while concurrently showing stable behavior with high power density.

This object is solved by the embodiments defined in the claims.

Accordingly, the present invention relates to an oxygen-vanadium redox flow battery with vanadium electrolyte having carbon particles dispersed therein. The battery is comprised of positive electrode, ion conductive membrane (cationic or anionic) and a negative electrode

Positive electrodes are applied for evolution of oxygen from water and reduction of oxygen into water. Both processes can be performed on the same Ti made porous electrode if it has appropriate bifunctional oxygen catalysts on its surface. In this context, "bifunctional" means that the catalyst is able to perform oxygen evolution and oxygen reduction. Alternatively two kinds of positive electrodes can be integrated into the cell:
1. Positive electrode used for the charge of the battery, i.e. for oxygen evolution reaction. These electrodes are made of porous Ti substrate and coated with catalyst for oxygen evolution reaction, such as platinum. These electrodes will be termed as "positive charging electrodes".
2. Positive solid electrode made of porous titanium substrate or carbonaceous material and coated with oxygen reduction catalyst, such as Ir based catalyst. This kind of positive electrodes is applied for the discharge of the battery and will be termed as "positive discharging electrodes".

Accordingly, during the charge of the battery water stream (liquid or humidified gas) is directed through the positive electrodes of first kind, i.e. positive charging electrodes. During the discharge, oxygen containing gas, preferably air, is passed through the positive discharging electrodes.

Protons produced or consumed with oxygen evolution/reduction reactions are transported through the ion conductive membrane from positive to negative half cell and *vice versa.* Vanadium electrolyte solution which is an acidic solution of vanadium (II) and vanadium (III) ions is applied for the energy storage and is placed separately, e.g. in a separate tank, and is recirculated through the negative half cell of the redox flow battery during charge and discharge cycles.

The negative electrode comprises solid carbonaceous material and carbonaceous particles dispersed in the vanadium electrolyte. Introduction of micro- and nanoparticles as a semi-solid negative electrode increases an effective surface area of the overall negative electrode that results in higher charge-discharge power densities of the redox flow battery (RFB) according to the present invention.

The negative and positive electrodes (with bifunctional catalysts or separate charging and discharging positive electrodes) can be made in flat or tubular geometry. Both electrodes and the membrane can be assembled into a membrane electrode assembly (MEA), while ion conductive membrane separates positive and negative electrodes. Alternatively, the solid negative electrode is not in direct contact with the positive electrode coated with the ion conductive membrane. During the charge of the redox flow battery, water containing gas stream or liquid water is passed on the surface of the positive bifunctional oxygen electrode (or a charging positive electrode with oxygen evolution catalysts on it) and is reacted on it to form oxygen and protons. Simultaneously, vanadium (III) ions are reduced to vanadium (II) ions on the solid and semi-solid electrodes in the negative half cell of the redox flow battery. During the discharge, reverse reactions occur on the negative electrode and on bifunctional oxygen electrode (or a positive discharging electrode with oxygen reduction catalysts on it) of the half cells of the redox flow battery.

In particular, the present invention relates to a RFB comprising the following major elements:
1. Porous or not porous electrodes in a shape of a plate, tube, micro-tube, wire, rod, felt or cloth or other type of geometry and made of carbonaceous material such as graphite, porous carbon, carbon based composite, carbon fiber, carbon felt, cloth or paper, or a composite based on carbonaceous material film made of carbon nanotubes (buckypaper) or microtubes made of carbon nanotubes (or carbon nanotubes based composite) and others. This electrode will be termed further as a "solid carbon based electrode".
2. Electrolyte made of vanadium ions, in particular V(II)/V(III) ions, in an aqueous acidic solution. Preferably, this electrolyte comprises a sulfuric acid solution with a concentration of 2-5 M and vanadium ions with a concentration of 1-2.5 M. This aqueous solution will be termed further as "electrolyte".
3. Semi-solid electrode which is a dispersion of porous or non-porous carbonaceous micro- or/and nano-particles such as: carbon black, graphite powder, porous carbon spheres, activated carbon powder, carbon nanotubes and others in the vanadium electrolyte. The size of these particles is preferably of nanometer to micrometer scale, in particular 20 nm - 150 µm (measured by Light or Scanning Electron Microscopy, Light Diffraction or other appropriate techniques). Preferably, the concentration of these porous or non-porous carbonaceous micro- or/and nano-particles within the vanadium based electrolyte is in a range of 5 wt.% to 30 wt.%. According to the invention, also mixtures of different porous or non-porous carbonaceous micro or/and nano-particles can be used. This electrode will be termed further as a "semi-solid electrode" or "slurry vanadium electrode", respectively.
4. Positive bifunctional porous electrode in tubular or flat geometry made of titanium and coated with catalyst(s) for oxygen evolution and oxygen reduction reactions, preferably coated with Pt/Ir/V or Pt/Ir or other suitable catalysts. Alternatively, 4.a. Positive charging electrode with flat or tubular geometry made of porous titanium and coated with oxygen evolution catalysts, such as Pt or other suitable catalyst, and 4.b. Positive discharging electrode with flat or tubular geometry made of porous carbonaceous materials or porous titanium and coated with oxygen reduction catalysts, such as Ir(oxide) or other suitable catalysts.

As a porous Ti support of flat geometry, conventional Ti meshes and felts or porous titanium sheets, made via the wet spinning of a particles-loaded polymer solution followed by a thermal treatment, are applied. According to an embodiment of the present invention a porous tubular Ti support is made via wet spinning of a particles loaded polymer solution followed by a thermal treatment. The carbon layer is removed via the post treatment with H₂O₂ 30% (w/w) at 50°C, or/and heat treatment at 400°C in air atmosphere or/and electrochemical anodic followed by cathodic treatment, or other available technique. Prior to catalyst coating, the Ti surface is treated according to the well known techniques (e.g. boiling HCl or oxalic acid solutions or electrochemical treatment) to increase the roughness of the Ti surface and to remove the titanium oxide layer. Application of Pt, Ir, Pt/Ir or Pt/Ir/V catalysts is done *via* thermal decomposition, electrochemical deposition or chemical reduction or other known techniques. Porous titanium electrode coated with appropriate catalysts will be termed further as an "oxygen electrode".

5. Ion conductive membrane in tubular or flat geometry that separates positive and negative half cells of the Redox Flow Battery. This ion conductive membrane will be termed further as a "membrane". Anion exchange and cation exchange membranes can be used. Just as an example, nafion-117 can be used as such a membrane.

Accordingly, the present invention relates to a RFB in which the energy is stored in electrolyte solution based on vanadium electrolyte, in particular an electrolyte that is comprised of V(II) ions and V(III) ions in acidic aqueous solution. The vanadium electrolyte solution can be stored in a separate tank and recirculated through the negative half cell of the redox flow battery during charge and discharge cycles.

The further figures are as follows:
**Figure 3** represents the schematic drawing of the oxygen-vanadium redox flow battery with solid negative and positive electrodes of a flat geometry and a semi-solid electrode.
**Figure 4** shows the oxygen-vanadium redox flow battery with tubular membrane electrode assembly with solid carbon and semi-solid electrodes located on the inner surface of the MEA.
**Figure 5** shows the oxygen-vanadium redox flow battery with tubular membrane electrode assembly with solid carbon and semi-solid electrodes located on the outer surface of the MEA.
**Figure 6** shows the oxygen-vanadium redox flow battery with solid and semi-solid electrodes separated from tubular positive electrode coated with ion conductive membrane.
**Figure 7** shows the oxygen-vanadium redox flow battery with solid and semi-solid electrodes immersed into the vanadium electrolyte solution and tubular positive electrodes without direct contact between negative electrode and an ion conductive membrane.

According to the present invention, a solid carbon based electrode with or without external current collector, an acidic aqueous solution of vanadium ions, and a semi-solid electrode made of carbonaceous micro- or/and nano-particles dispersed in the liquid vanadium electrolyte constitute all together a negative half cell of the RFB. Within the charge of the RFB, that is performed by the application of external source of electrical current, vanadium ions are oxidized from the V(III) form into V(II) form according to the general stoichiometric reaction described by Equation 1 on the solid carbon based electrode and on the semi-solid electrode.

On the same solid and semi-solid electrodes, vanadium ions in the electrolyte are reduced from the V(II) form into the V(III) form (back reaction described by Equation 1) during the discharge of the RFB that operates then as a galvanic cell and delivers electrical energy to the external power consumer.

Opposite reactions of oxygen evolution and reduction (Eq. 3) occur on the same bifunctional oxygen electrode. Alternatively, oxygen evolution reaction takes place on positive charging electrode and oxygen reduction reaction takes place on oxygen discharging electrode. According to the present invention, during the charge of the RFB, water is supplied to the surface of the bifunctional oxygen electrode (or a positive charging electrode) as liquid water or its vapor, in the last case air or other gas can be applied as a carrier gas. The discharge of the battery is performed using oxygen containing gas (such as air, pure oxygen or others that might be humidified) that is passed over the surface of the bifunctional oxygen electrode (or the surface of the positive discharging electrode).

Thus, a bifunctional oxygen electrode (or positive charging and discharging electrodes) and a water stream in a liquid or gas phase and/or an oxygen containing gas stream constitute a positive half cell of the Redox Flow Battery according to the present invention.

The two above-described half cells of the RFB according to the present invention are separated by an ion conductive membrane that serves as an electronic insulator preventing a short-circuiting between negative and positive electrodes and closes the electrical circuit of the RFB *via* the transport of protons generated or consumed within the reactions described by Equation 3.

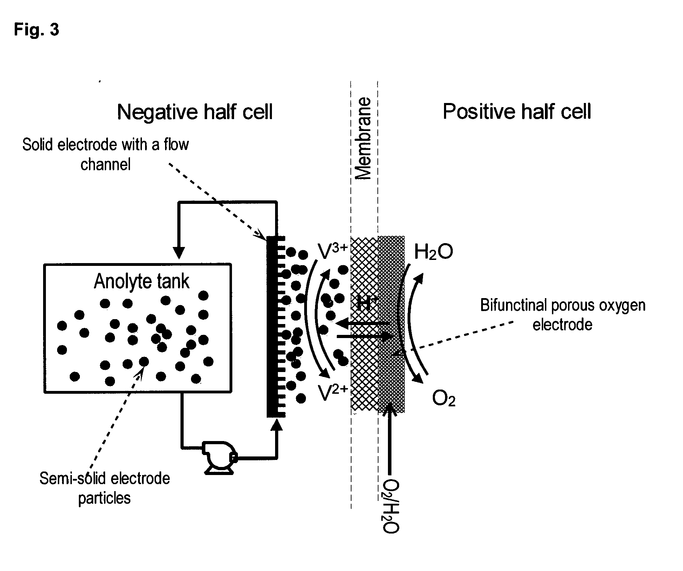

The oxygen-vanadium redox flow battery with semi-solid electrode where carbon particles are dispersed in an acidic vanadium based electrolyte, can have four basic embodiments that are presented further in more details.
1. According to a first embodiment of the present invention, both half cells (i.e. positive and negative) are in a flat geometry. Figure 3 represents the schematics of this type of the air-vanadium redox flow battery comprised of a bifunctional oxygen electrode, carbonaceous solid and semi-solid electrodes, ion conductive membrane and an acidic vanadium electrolyte solution. According to this concept, the vanadium electrolyte with semi-solid electrode is recirculated through the cell *via* a flow channel engraved in the solid carbon based electrode (i.e. graphite plate or carbon based composite) and oxygen gas containing stream with controlled humidity or a water (vapor or liquid) is passed through the positive half cell with the bifunctional oxygen electrode. Performance of the cell might be enhanced by introduction of porous solid carbon based electrode in a form of cloth, felt or paper or a film made of carbon nanotubes (buckypaper) or other porous carbonaceous material between the solid carbon based electrode with the engraved flow channel and the ion conductive membrane.

Alternatively, the redox flow battery of flat geometry comprises two types of MEAs that are used for charge and discharge of the RFB:
(i) Membrane electrode assemblies as shown on Figure 3, but with positive charging electrodes; and
(ii) Membrane electrode assemblies as shown on Figure 3, but with positive discharging electrodes.
In this case, the redox flow battery of the present invention contains a least one positive charging electrode and at least one positive discharging electrode and at least one negative electrode.

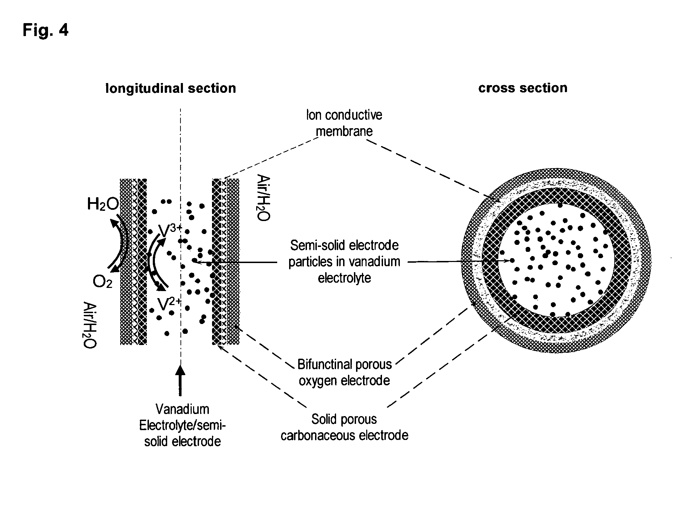

2. In a second embodiment of the present invention, both half cells are incorporated together in the membrane electrode assembly of tubular form while one electrode is located inside the second electrode and separated by an ion conductive membrane. Figure 4 shows a tubular air-vanadium redox flow battery comprised of porous Ti electrode coated with bifunctional oxygen catalyst, ion conductive membrane, porous carbon made tube and a semi-solid electrode with a vanadium electrolyte solution, i.e. carbon particles dispersed in the acidic vanadium based electrolyte. The solid porous carbon electrode (such as a tube (or microtube) made of carbon nanotubes or CNT-based composite) is an internal electrode of the membrane electrode assembly. The vanadium electrolyte with the semi-solid electrode is recirculated between the electrolyte tank (not shown in Figure 4) through the tubular MEA. Oxygen/water streams are flowing through the lumen of the MEA. Alternatively, the redox flow battery can be made of two types of tubular membrane electrode assemblies, one for charge (with oxygen evolution positive electrodes) and the second for the discharge (with oxygen reduction electrodes).

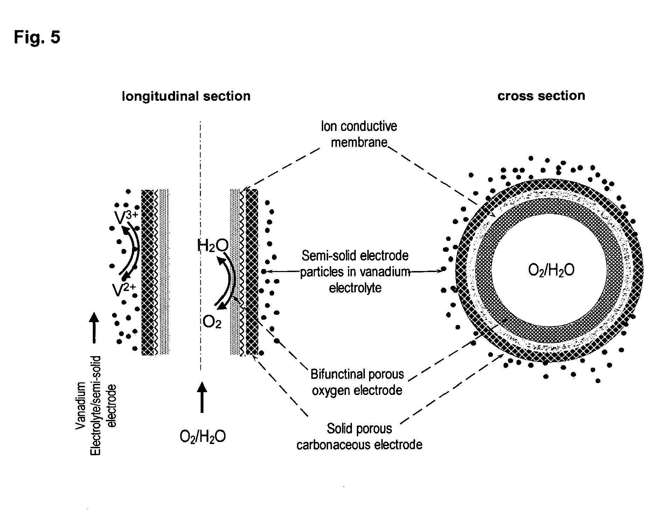

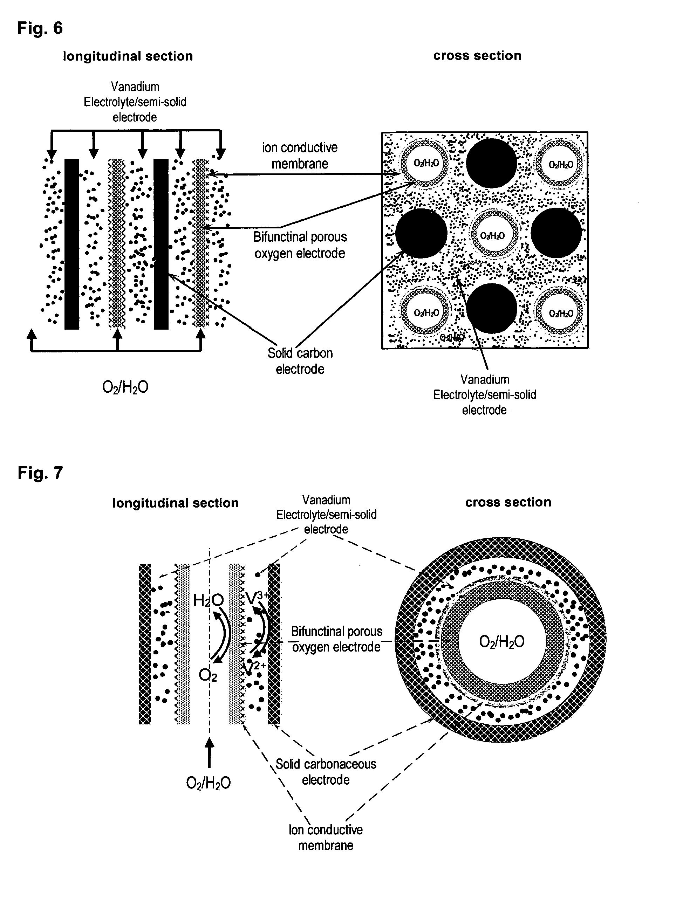

Alternatively, a tubular membrane electrode assembly is made of porous solid carbon based electrode (such as carbon fiber, felt, cloth or paper) as an external tubular electrode and porous Ti tubular electrode as an internal electrode with an ion conductive membrane separating the two electrodes. The solid carbon based electrode is applied with or without additional current collector that is made of metal wire with protective coatings (if required) or carbonaceous material. In this embodiment of the present invention, the vanadium based electrolyte and semi-solid electrode, i.e. "slurry vanadium electrode", is located outside the tubular MEA, as it is depicted in Figure 5.
3. According to a third embodiment of the present invention as shown in Figure 6, positive and negative half cells of the membrane electrode assembly of the air-vanadium redox flow battery are not incorporated in one MEA, that means that there is no direct contact between solid carbon based electrode and ion conductive membrane (see Figure 6). According to this embodiment of the present invention, the oxygen electrode is coated with ion conductive membrane and the oxygen/water stream is passed into the lumen of the oxygen electrode. The vanadium electrolyte solution with semi-solid electrode is located outside of the oxygen electrode. Carbon made porous or non-porous solid electrodes are immersed into the electrolyte solution. The solid electrode can be in the form of rod, wire, tube, carbon felt or cloth, microtube made of carbon nanotubes and others. The solid electrode might be also assembled with a current collector. Thus, in case of graphite tubes as negative, solid carbon based electrode, copper or other metallic current collector is located inside the tube. Similarly to the above second embodiment of the present invention, the redox flow battery according to this third embodiment can be made of two kinds of positive half cells, one for charge (with oxygen evolution positive electrodes) and the second for the discharge (with oxygen reduction electrodes).
4. In a fourth embodiment of the present invention as shown in Figure 7 both positive and negative electrodes of the redox flow battery are of tubular form and the positive electrode with an ion conductive membrane on its outer surface is located inside the negative electrode. The internal diameter of the tubular negative electrode is sufficiently bigger than the outer surface of the ion conductive membrane to provide a channel for the flow of the vanadium based electrolyte with dispersed semi-solid electrode' particles. Oxygen/water stream is passed into the lumen of oxygen electrode and vanadium electrolyte with dispersed carbonaceous particles is recirculated between the holding tank and the electrochemical cell. Separate cells can be also applied for the fourth embodiment: one for charge (with oxygen evolution positive electrodes) and the second for the discharge (with oxygen reduction electrodes).

## Claims

1. A Redox Flow Battery (RFB) comprising at least one oxygen electrode being capable of transforming water into oxygen and protons and *vice versa,* an ion conducting membrane, a solid carbon based electrode and an acidic vanadium based electrolyte having carbon particles dispersed therein to form a semi-solid electrode.

2. The Redox Flow Battery according to claim 1, wherein the size of the carbon particles dispersed in the acidic vanadium based electrolyte is in the range of 20 nm - 150 µm.

3. The Redox Flow Battery according to claim 1 or 2, wherein the concentration of the carbon particles dispersed in the acidic vanadium based electrolyte is in the range of 5 wt.% to 30 wt.%.

4. The Redox Flow Battery according to anyone of claims 1 to 3, wherein the carbon particles dispersed in the acidic vanadium based electrolyte are porous or non-porous carbonaceous micro- or nano-particles selected from carbon black, graphite powder, porous carbon spheres, activated carbon powder, carbon nanotubes or carbon nanotubes based composites or a combination from two or more thereof.

5. The Redox Flow Battery according to anyone of claims 1 to 4, wherein the acidic vanadium based electrolyte is an aqueous sulfuric acid solution of vanadium (II) and vanadium (III) ions with a concentration of 2-5 M and vanadium ions with a concentration of 1-2.5 M.

6. The Redox Flow Battery according to anyone of claims 1 to 5, wherein the solid carbon based electrode is a solid non-porous or porous carbon made electrode with flat or tubular geometry.

7. The Redox Flow Battery according to anyone of claims 1 to 6, wherein the oxygen electrode comprises a flat or tubular, porous Ti electrode coated with catalysts for oxygen evolution and oxygen reduction reaction, preferably Pt/Ir/V or Pt/Ir.

8. The Redox Flow Battery according to anyone of claims 1 to 6, comprising two kinds of positive oxygen electrodes, including a positive electrode made of porous Ti substrate and coated with a catalyst for oxygen evolution reaction, preferably platinum, for the charge of the battery, and a positive electrode made of porous titanium substrate or carbonaceous material and coated with oxygen reduction catalyst, preferably Ir based catalyst, for the discharge of the battery.

9. The Redox Flow Battery according to anyone of the preceding claims, which is constituted of a tubular membrane electrode assembly comprised of porous Ti tube or microtube coated with one or more catalysts for oxygen evolution and oxygen reduction reaction, preferably Pt/Ir/V or Pt/Ir, as an outer electrode, and a solid carbon based porous electrode and the acidic vanadium based electrolyte having carbon particles dispersed therein to form a semi-solid electrode as inner electrodes, as well as an ion conductive membrane between them.

10. The Redox Flow Battery according to anyone of the preceding claims, which is constituted of a tubular membrane electrode assembly made of porous solid carbon based electrode as an external tubular electrode and porous Ti tubular electrode as an internal electrode with the ion conductive membrane separating the two electrodes, and the vanadium electrolyte having carbon particles dispersed therein to form a semi-solid electrode is located outside the membrane electrode assembly.

11. The Redox Flow Battery according to anyone of the preceding claims, wherein the electrodes are separated, the positive electrode is Ti made porous tube or microtube coated with one or more catalysts for oxygen evolution and oxygen reduction reaction, preferably Pt/Ir/V or Pt/Ir, and coated with an ion conductive membrane, the negative electrode does not have a direct contact with the ion conductive membrane and is made of solid porous or non-porous carbonaceous materials, and both positive and negative electrodes are immersed into the vanadium based electrolyte solution having carbon particles dispersed therein to form a semi-solid electrode.

12. The Redox Flow Battery according to anyone of the preceding claims, which is constituted of a tubular membrane electrode assembly made of a tubular porous Ti electrode coated with one or more catalysts for oxygen evolution and oxygen reduction reaction, preferably Pt/Ir/V or Pt/Ir, and an ion conductive membrane on the outer surface of the oxygen electrode, where this positive electrode is located inside a non-porous or porous tubular solid carbon made electrode of bigger outer diameter, and wherein the vanadium based electrolyte solution having carbon particles dispersed therein to form a semi-solid electrode is located and recirculated in the flow channel between the ion conductive membrane and an inner surface of solid tubular negative electrode.

13. The Redox Flow Battery according to anyone of the preceding claims, wherein the oxygen electrode is of tubular or flat geometry and is made by wet spinning of a polymer solution loaded with titanium particles followed by a thermal treatment in inert atmosphere and subsequent treatment in H₂O₂ solution or/and thermal treatment in oxygen atmosphere or electrochemical treatment (anodic followed by cathodic), chemical etching and application of bifunctional oxygen catalysts via thermal decomposition, electrodeposition or chemical reduction and followed by a coating with a cationic or anionic membrane by casting of ionomer or polymer solution and subsequent polymerization if required.
